(19) Europäisches Patentamt
European Patent Office
Office européen des brevets

(11) **EP 4 668 143 A1**

(12) **DEMANDE DE BREVET EUROPEEN**

(43) Date de publication:
**24.12.2025 Bulletin 2025/52**

(21) Numéro de dépôt: **25172147.8**

(22) Date de dépôt: **24.04.2025**

(51) Classification Internationale des Brevets (IPC):
**G06F 21/32** (2013.01)     **G06V 40/16** (2022.01)
**G06V 40/40** (2022.01)     **G06V 10/141** (2022.01)
**G06V 10/143** (2022.01)

(52) Classification Coopérative des Brevets (CPC):
**G06F 21/32; G06V 10/141; G06V 10/143;
G06V 40/166; G06V 40/168; G06V 40/45**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité: **20.06.2024 FR 2406665**

(71) Demandeur: **Idemia Public Security France
92400 Courbevoie (FR)**

(72) Inventeurs:
• **BEAUDET, Jean
  92400 COURBEVOIE (FR)**
• **AUQUE-PALLEZ, Ariel
  92400 COURBEVOIE (FR)**

(74) Mandataire: **IPS
2, place Samuel de Champlain
92400 Courbevoie (FR)**

(54) **PROCÉDÉ DE SÉCURISATION D'ACCÈS À UNE SOURCE DE DONNÉES**

(57)    La présente invention concerne un procédé de sécurisation d'accès à une source de données à partir d'un dispositif (1) par un utilisateur dudit dispositif, le dispositif comportant une source lumineuse (5) et une caméra (3) orientées vers ledit utilisateur, ledit procédé comportant des étapes de :
- acquisition vidéo par la caméra (3) ;
- pilotage, pendant l'étape d'acquisition, de la source lumineuse (5) selon un signal temporellement variable de fréquence fondamentale imposée et fixée aléatoirement, ;
- évaluation, à partir d'une première série d'images de l'acquisition, d'une présence de fraude par injection ou recapture par :
- estimation de la fréquence fondamentale du signal temporel observé ;
- autorisation de poursuite de l'accès à la source de données en fonction de la fréquence fondamentale imposée et estimée.

EP 4 668 143 A1

[Fig. 1]

Fig. 1

## Description

### Arrière-Plan technologique

La présente invention concerne le domaine de la sécurisation des accès distants à des sources de données, que ce soit lors d'un enrôlement (en vue d'une création de compte en ligne par exemple), ou lors d'une consultation (du compte). En effet, les applications mobiles conditionnent usuellement les accès à distance à une authentification biométrique de l'utilisateur sur son terminal connecté (tel que téléphone mobile, montre connectée, tablette ou ordinateur). Pour ce faire, une acquisition à distance d'une image du visage de l'utilisateur est mise en œuvre par une caméra du terminal connecté de manière à pouvoir authentifier l'utilisateur. Néanmoins, des fraudes existent lors de ce type d'acquisition, il est donc nécessaire de sécuriser cette étape et de détecter les fraudes potentielles, notamment les fraudes par injection (émulation d'une caméra virtuelle) (appelées en anglais : « Injection Attack ») ou par présentation (appelée en anglais : « Presentation Attack »), ce qui inclut notamment les fraudes montrées sur papier, écran.

Il est connu, par exemple dans le document FR3100074, de demander à l'utilisateur d'exécuter un geste déterminé aléatoirement mais ceci peut être incommodant pour l'utilisateur, en particulier si ce dernier souffre d'un handicap affectant sa mobilité.

### Présentation de l'invention

L'invention a pour but de remédier au moins en partie à ces inconvénients et préférentiellement à tous, et vise notamment à proposer une méthode de sécurisation d'accès distant à une source de données à partir d'un dispositif qui soit robuste aux fraudes par injection ou par présentation et accessible à tous, sans inconfort ni effort de la part de l'utilisateur.

Selon un aspect de l'invention, il est proposé un procédé de sécurisation d'accès distant à une source de données à partir d'un terminal par un utilisateur dudit terminal, le terminal comportant une source lumineuse et une caméra orientées vers ledit utilisateur, ledit procédé comportant des étapes de :

- acquisition vidéo par la caméra ;
- pilotage, pendant l'étape d'acquisition, de la source lumineuse selon un signal temporellement variable imposé dont au moins un paramètre est invariant temporellement et de valeur fixée aléatoirement;
- évaluation , à partir d'une première série d'images de l'acquisition, d'une présence de fraude par injection ou recapture par :
- estimation dudit au moins un paramètre invariant d'un signal temporel de la première série d'images ;
- autorisation de poursuite de l'accès à la source de données en fonction de la valeur fixée et de la valeur estimée dudit au moins un paramètre invariant.

Ce procédé, par analyse de la réponse de l'objet capturé à l'éclairage temporellement variable émis par la source lumineuse pilotée, permet d'adresser les inconvénients énumérés précédemment et s'applique préférentiellement à partir d'un terminal mobile connecté (tel que téléphone mobile, montre connectée, tablette ou ordinateur). Il permet ainsi de sécuriser l'accès aussi bien dans un contexte d'enrôlement (par exemple pour la création d'un compte en banque), ou dans un contexte de consultation (par exemple pour une preuve d'identité dans le cadre d'une démarche administrative, ou la consultation de comptes en ligne). En effet, la nature aléatoire (ou alternativement pseudo aléatoire) du signal constitue un défi et permet de vérifier que la vidéo acquise a été acquise par la caméra du terminal et image l'utilisateur face caméra en temps réel au moment de l'acquisition par la caméra du terminal et non à partir d'un objet tiers ou enregistrée à un autre moment que ledit moment d'acquisition. En outre, la détermination de la propriété temporellement invariante du signal observé ne nécessite pas de calage particulier avec un évènement dédié pour identifier une séquence dédiée, il n'y a donc pas besoin d'analyser les images acquises une à une, ce qui rend le procédé plus flexible et moins consommateur de mémoire. Plusieurs paramètres invariants pouvant exister, complexifiant le défi. Ainsi, si le paramètre invariant temporellement n'est pas retrouvé dans la première série d'images (notamment car la valeur de ce paramètre varie continuellement dans le signal acquis), l'accès à la source de données ne peut pas se poursuivre. Dans un mode de réalisation, l'évaluation, à partir d'une première série d'images de l'acquisition, d'une présence de fraude par injection ou recapture comporte :

- détection d'une région d'intérêt prédéterminée dans les images de la première série d'images;
- détermination d'un signal temporel observé représentatif des valeurs de pixels des images de la première série d'images sur tout ou partie de la région d'intérêt détectée ;
- dans l'estimation, ledit signal temporel de la première série d'images est ledit signal temporel observé;
- calcul d'un rapport entre ledit au moins un paramètre invariant du signal temporel observé et ledit au moins un paramètre invariant du signal imposé ;

l'autorisation de poursuite de l'accès à la source de données étant fonction du rapport de paramètre invariant calculé, ce qui permet une mise en œuvre simple et notamment adaptable à une architecture hybride dans laquelle des calculs sont déportés sur un serveur externe car il est possible de n'envoyer que le signal temporel observé, limitant ainsi l'échange de données.

Avantageusement, l'estimation du paramètre invariant peut être réalisée par un réseau de neurones que ce soit directement à partir de la première série d'images de l'acquisition ou du signal temporel observé déterminé qui en est extrait.

Dans un mode de réalisation, le rapport est une différence ou un ratio, ce qui permet de comparer la valeur fixée à la valeur estimée du ou de chaque paramètre invariant entre elles.

De manière avantageuse, le procédé peut comporter une étape intermédiaire de détermination d'une probabilité d'injection ou de recapture en fonction de du rapport calculé ; avec autorisation de poursuite de l'accès à la source de données si la probabilité d'injection ou de recapture est inférieure à un premier seuil prédéterminé, ce qui permet notamment une normalisation du rapport calculé permettant ensuite une comparaison de la probabilité obtenue audit premier seuil prédéterminé, quel que soit le type de paramètre invariant.

De manière équivalente, il peut être déterminé une probabilité de non-recapture ni injection et dans ce cas la condition de seuil s'applique si ladite probabilité est supérieure à un autre premier seuil prédéterminé.

Dans un mode de réalisation, la région d'intérêt prédéterminée comprend tout ou partie d'un visage, ce qui ne demande pas de manipulation spécifique à l'utilisateur du terminal, ce dernier étant habitué à l'orienter vers son visage, la caméra frontale réalisant l'acquisition.

Dans un mode de réalisation, le signal temporellement variable imposé est une composante couleur périodique dont le paramètre invariant temporellement est une fréquence fondamentale, ce qui permet une analyse spectrale simple et rapide d'un signal périodique. Ladite composante couleur du signal temporel observé étant alors extraite du signal temporel observé représentatif des valeurs de pixels des images de la première série d'images sur tout ou partie de la région d'intérêt détectée pour estimer ledit au moins un paramètre invariant du signal temporel observé. En outre, plusieurs signaux temporellement variables imposés correspondant à de multiples composantes couleurs (par exemple rouge et bleu) peuvent être pilotés, ce qui permet d'augmenter la diversité du défi, chaque signal (composante couleur) étant analysé, et l'autorisation de poursuite de l'accès à la source de données étant fonction des multiples différences de valeurs du paramètre invariant, ici la fréquence, calculées pour chacune des composantes concernées entre le signal imposé et le signal observé.

Préférentiellement, dans le spectre visible, seules la composante rouge et la composante bleue sont des signaux temporellement variables imposés, ce qui facilite l'analyse car ce choix rend le procédé robuste à la diaphonie des couleurs (appelée en anglais : « color crosstalk ») lié au fait par exemple que le canal rouge de la caméra voit un peu le canal voisin vert de la source lumineuse, la composante verte restant invariable dans le temps.

Avantageusement, le signal temporellement variable imposé est appliqué à une composante infrarouge, ce qui permet de mettre en œuvre le procédé par variation lumineuse en dehors des longueurs d'onde visibles sans que l'utilisateur ne s'en aperçoive.

Avantageusement, chaque signal temporellement variable imposé est périodique, le paramètre invariant de chaque signal étant sa fréquence fondamentale, ce qui facilite l'estimation du paramètre invariant dans le signal observé, via une analyse spectrale.

Dans un autre mode de réalisation, le signal temporellement variable imposé comporte au moins deux composantes couleur et le paramètre invariant du signal est un ratio de fréquence instantanée entre lesdites au moins deux composantes. Ceci permet notamment d'utiliser des composantes couleur non périodiques, par exemple modulées en fréquence mais dont la modulation suit un ratio fixé.

En variante, le signal temporellement variable imposé comporte au moins deux composantes couleur périodiques de même fréquence fondamentale ou multiples d'une même fréquence fondamentale, avec un déphasage entre lesdites au moins deux composantes, ledit au moins un paramètre invariant temporellement du signal imposé étant ladite fréquence fondamentale ou le déphasage, préférentiellement les deux. Ceci permet notamment de disposer de plusieurs invariants : une fréquence fondamentale, préférentiellement unique et identique pour chaque composante couleur temporellement variable du signal, et le déphasage entre lesdites composantes, ce qui rend le défi plus diversifié.

Dans un mode de réalisation, la fréquence fondamentale imposée est fixée aléatoirement dans une plage [0.5Hz, 3Hz], ce qui favorise le bien-être de l'utilisateur et permet de recourir à un échantillonnage standard de 15 images par seconde par exemple, la fréquence fondamentale pouvant être unique pour toutes les composantes concernées ou différenciée par composante.

Dans un mode de réalisation, le terminal comporte un écran d'affichage, la source lumineuse étant tout ou partie de l'écran d'affichage du terminal et le pilotage de la source lumineuse correspondant à un affichage sur tout ou partie de l'écran de couleur variant selon le signal temporellement variable imposé. Ce mode préférentiel, permet de conserver la tenue du terminal de manière habituelle, sans avoir, par exemple à le retourner, ce qui évite donc des difficultés de manipulations et reste discret.

Avantageusement, au moins une composante couleur temporellement variable imposée est de type créneaux, ce qui permet de piloter un signal simple.

Dans un mode de réalisation, le signal temporellement variable imposé est de type sinusoïdal, c'est-à-dire que la composante ou l'au moins une des composantes couleur temporellement variables imposées est de type sinusoïdal, ce qui est simple à piloter, et notamment si les deux composantes couleur temporellement variables du signal sont sinusoïdales, l'analyse spectrale est encore simplifiée car un seul pic apparait par composante couleur.

Avantageusement, au moins une composante couleur temporellement variable imposée est de type triangulaire, ce qui permet un pilotage aisé.

Avantageusement, les composantes couleur temporellement variables imposées sont de types différents, avec par exemple une composante bleue triangulaire et une composante rouge sinusoïdale, ce mélange permettant d'augmenter la diversité du défi.

Dans un mode de réalisation, le procédé comporte une étape d'évaluation, à partir d'une deuxième série d'images de l'acquisition, d'une présence de fraude par présentation par :

- détermination d'au moins une zone d'intérêt dans la région d'intérêt détectée, ladite zone d'intérêt étant commune aux images de la deuxième série,
- détermination du signal temporel observé par zone d'intérêt,
- estimation, par zone d'intérêt, d'une contribution du signal imposé au signal observé de manière à former un vecteur de retour,
- détermination d'un score par application d'un classifieur audit vecteur, ledit classifieur étant notamment mis en œuvre par un réseau de neurones,

et l'étape d'autorisation de poursuite de l'accès à la source de données étant fonction du score déterminé. Cette vérification complémentaire permet d'être robuste aux fraudes sur écran ou par présentation de photo imprimée par exemple, l'estimation de la contribution pouvant se faire notamment à partir d'un signal imposé périodique mais non exclusivement, par exemple à partir de signaux modulés en fréquence (tels que déjà mentionnés) en appliquant un filtrage temporel passe-bande couvrant la bande des fréquences utilisées lors de la modulation

De manière avantageuse, le procédé peut comporter une étape intermédiaire de détermination de la probabilité de fraude par présentation en fonction du score déterminé ;
avec autorisation de poursuite de l'accès à la source de données si la probabilité de fraude par présentation est inférieure à un deuxième seuil prédéterminé.

De manière équivalente, il peut être déterminé une probabilité de non de fraude par présentation et dans ce cas la condition de seuil s'applique si ladite probabilité est supérieure à un autre seuil prédéterminé.

Avantageusement, si plusieurs signaux temporels temporellement variables sont imposés, autant de signaux temporels sont observés par zone d'intérêt, le vecteur de retour étant formé d'autant de sous-vecteurs que de signaux temporellement variables imposés, ce qui permet de disposer en entrée du classifieur d'un vecteur de vecteurs (appelé aussi matrice, avec par exemple autant de colonnes que de signaux imposés (composantes couleurs périodiques notamment) et autant de lignes que de zones) robustifiant le classifieur.

De manière avantageuse, le procédé peut comporter une étape de détermination par zone d'intérêt d'une contribution des autres sources d'éclairage par soustraction de la contribution du signal imposé au signal variable observé de manière à former un sous-vecteur du vecteur de retour, ce qui permet d'utiliser un vecteur de vecteurs en entrée du classifieur, le rendant plus performant. En outre, dans la mesure où la contribution du signal imposé au signal acquis est faible, on peut aussi approximer la contribution des autres sources d'éclairage par une simple moyenne temporelle du signal acquis.

Avantageusement, préalablement à l'étape de détermination de la zone d'intérêt est mise en œuvre, pour chaque image de la série, une étape d'alignement spatial desdites images de la deuxième série par rapport à un point de référence de la région d'intérêt détectée, par exemple par recalage des yeux, ce qui permet de faciliter la détermination de zone d'intérêt correspondant par exemple à la même portion du visage dans les différentes images de la deuxième série.

Avantageusement, la zone d'intérêt est un triangle d'un maillage de la région d'intérêt, ou un pixel au voisinage d'un point d'intérêt de la région d'intérêt, ladite zone d'intérêt étant présente dans toutes les images de la seconde série. Par exemple, un point d'intérêt est un point sémantique du visage.

Dans un mode de réalisation, le procédé comporte une étape d'évaluation, à partir d'une troisième série d'images de l'acquisition, d'une présence de fraude spécifique par recapture ou injection par :

- détermination d'une latence observée en fonction de la fréquence fondamentale du signal temporellement variable périodique imposé et d'un déphasage estimé entre le signal temporel périodique imposé et un signal temporel observé représentatif des valeurs de pixels des images de la troisième série d'images sur tout ou partie de la région d'intérêt détectée commune auxdites images de la troisième série d'images,

- calcul d'une différence entre la latence observée et une latence de référence obtenue préalablement pour ledit terminal ou pour un même modèle de terminal;

et l'autorisation de poursuite de l'accès à la source de données étant fonction de la différence de latence calculée. Cette étape additionnelle permet de vérifier la cohérence entre le temps de latence observé et le temps de latence de référence et ainsi de mieux identifier les fraudes par recapture ou injection.

De manière avantageuse, le procédé peut comporter une étape intermédiaire de - détermination de la probabilité spécifique de fraude par recapture ou injection en fonction de la différence des latences calculée, avec autorisation de poursuite de l'accès à la source de données si la probabilité spécifique de fraude par recapture ou injection est inférieure à un troisième seuil prédéterminé, ce qui permet notamment une normalisation de la différence des latences calculée permettant ensuite une comparaison de la probabilité spécifique audit troisième seuil prédéterminé.

De manière équivalente, il peut être déterminé une probabilité spécifique de non fraude par recapture ou injection et dans ce cas la condition de seuil s'applique si ladite probabilité est supérieure à un autre troisième seuil prédéterminé.

Avantageusement, un paramètre d'acquisition de la caméra, notamment une taille d'image, est modifié pendant l'acquisition avec augmentation de la probabilité spécifique de fraude par recapture ou injection en absence de modification de la latence observée pendant l'acquisition.

Dans un mode de réalisation, la deuxième ou troisième série d'images de l'acquisition et la première série d'images de l'acquisition sont identiques.

Selon un autre aspect de l'invention, il est proposé un programme d'ordinateur comprenant des instructions adaptées à la mise en œuvre de chacune des étapes du procédé selon l'invention lorsque ledit programme est exécuté sur un ordinateur.

Selon un autre aspect de l'invention, il est proposé un moyen de stockage non transitoire d'informations, amovible ou non, partiellement ou totalement lisible par un ordinateur ou un microprocesseur comportant des instructions de code d'un programme d'ordinateur pour l'exécution de chacune des étapes du procédé selon l'invention.

Avantageusement, un dispositif selon l'invention comporte ledit terminal et une unité de traitement de l'information mettant en œuvre ledit procédé, l'unité de traitement comportant ledit moyen de stockage non transitoire d'informations, l'unité de traitement pouvant être localisée dans le terminal ou répartie entre le terminal et un serveur distant, ce qui permet de disposer d'un dispositif avec une architecture sécurisée de fonctionnement.

## Présentation des figures

L'invention sera mieux comprise, grâce à la description ci-après, qui se rapporte à des modes de réalisations et des variantes selon la présente invention, donnés à titre d'exemples non limitatifs et expliqués avec référence aux dessins schématiques annexés, dans lesquels :

[Fig.1] la [Fig.1] montre de façon schématique une personne présentant son visage à un terminal du dispositif lors de la mise en œuvre du procédé de sécurisation selon un mode de réalisation possible de l'invention,

[Fig.2] la [Fig.2] représente un bloc-diagramme schématique d'une unité de traitement de l'information pour la mise en œuvre d'un ou plusieurs modes de réalisation de l'invention,

[Fig.3] la [Fig.3] montre un schéma de principe d'étapes mises en œuvre dans le procédé de sécurisation, selon un mode de réalisation possible de l'invention,

[Fig.4] la [Fig.4] montre un schéma de principe d'étapes complémentaires mises en œuvre dans le procédé de sécurisation, selon un mode de réalisation possible de l'invention, et [Fig.5] la [Fig.5] montre un schéma de principe d'étapes additionnelles mises en œuvre dans le procédé de sécurisation, selon un mode de réalisation possible de l'invention.

Des références identiques seront utilisées d'une figure à l'autre pour désigner des éléments identiques ou similaires, dans leur forme ou dans leur fonction.

Pour un motif de concision le terme sensiblement désigne les valeurs à plus ou moins 10%.

## Description détaillée

L'invention peut s'appliquer dans différents contextes. L'exemple de réalisation illustré se place dans le contexte de sécurisation d'accès distant à une source de données à partir d'un terminal utilisateur, ici un téléphone mobile intelligent (en anglais « smartphone »), par un utilisateur du terminal mobile, le téléphone mobile comportant une source lumineuse, ici une partie de l'écran du téléphone mobile, et une caméra frontale orientées vers l'utilisateur pour acquérir des images de son visage. Un autre exemple de réalisation (non illustré ici) de l'invention concerne l'acquisition d'une autre caractéristique biométrique, telle qu'un dermatoglyphe de l'utilisateur du téléphone mobile, par exemple par la caméra (principale) arrière du téléphone mobile, la source lumineuse étant par exemple le flash de ladite caméra arrière. Dans tous les cas, il s'agit de détecter des fraudes en pilotant le signal lumineux de telle façon que ses variations aient une propriété invariante dans le temps, fixée aléatoirement.

Le procédé selon l'invention peut être utilisé dans diverses applications. Notamment, l'invention peut viser à mettre en œuvre une méthode de surveillance d'un conducteur, ou à mettre en œuvre une détection de fraude dans le cadre d'une authentification biométrique en vue d'un enrôlement ou d'une consultation de données. Dans tous les cas, une estimation d'une propriété invariante temporellement du signal observé, reçu, est exploitée pour déterminer la présence ou non de fraude.

Pour des raisons de simplicité et de façon illustrative et non limitative, l'invention sera ci-dessous présentée dans le cadre d'un procédé biométrique d'authentification d'un visage, mais les enseignements peuvent être utilisés pour toute application impliquant l'acquisition d'un visage. Dans ce cadre, pour permettre de vérifier l'authenticité ou non du visage présenté, l'action effectuée par l'unité de traitement est une mise en œuvre d'une méthode de détection de fraude à partir de la comparaison entre le signal imposé et le signal observé.

Le temps de latence correspond au temps de réponse de l'ensemble d'une chaine d'acquisition, à savoir du terminal du dispositif et se décompose notamment en un délai d'éclairage par la source lumineuse (notamment d'affichage par l'écran) et un délai d'acquisition de la caméra.

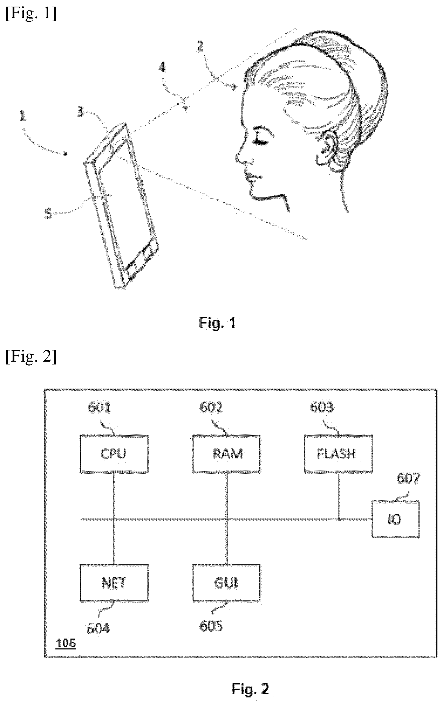

En référence à la [Fig.1], le procédé d'authentification peut être mis en œuvre au moyen d'un terminal 1 d'un dispositif auquel un visage 2 d'un utilisateur est présenté. Le terminal comprend notamment une unité de traitement de l'information et une caméra 3 adaptée pour acquérir des flux d'images d'objets présentés dans son champ d'acquisition 4. De préférence, le terminal 1 comprend également un écran 5 capable d'afficher des images à l'utilisateur, et est configuré de sorte que l'utilisateur puisse simultanément présenter son visage 2 dans le champ d'acquisition 4 de la caméra 3, et regarder l'écran 5. Le terminal 1 peut ainsi être par exemple un terminal mobile de type "smartphone", montre connectée, ou tablette qui présente typiquement une configuration adéquate entre la caméra 3 et l'écran 5. Le terminal 1 peut néanmoins être tout type de terminal informatisé, et peut en particulier être un ordinateur comprenant caméra et source lumineuse ou une borne fixe dédiée aux contrôles d'identité, par exemple installée dans un aéroport. Le terminal 1 peut encore être un terminal électronique embarqué dans un véhicule formant un système connecté de reconnaissance du conducteur, ou d'accès à des applications pour le conducteur ou le passager. L'unité de traitement de l'information comprend au moins un processeur et une mémoire, et permet d'exécuter un programme informatique pour la mise en œuvre du procédé.

La [Fig.2] est un exemple de bloc-diagramme schématique d'une unité de traitement de l'information 106 du dispositif selon l'invention pour la mise en œuvre d'un ou plusieurs modes de réalisation de l'invention. L'unité de traitement de l'information 106 comprend typiquement au moins un calculateur, ordinateur ou un microprocesseur ou tout autre moyen informatique permettant l'exécution d'un programme informatique en charge du contrôle des différentes étapes du procédé selon l'invention. L'unité de traitement de l'information 106 comporte un bus de communication connecté à :

- une unité centrale de traitement 601, tel qu'un microprocesseur, notée CPU ;
- une mémoire transitoire 602, notée RAM, pour mémoriser le code exécutable du procédé de réalisation de l'invention ainsi que les registres adaptés à enregistrer des variables et des paramètres nécessaires pour la mise en œuvre du procédé selon des modes de réalisation de l'invention ; la capacité de mémoire du dispositif peut être complétée par une mémoire RAM optionnelle connectée à un port d'extension, par exemple ;
- une mémoire non transitoire 603, notée FLASH, pour stocker les programmes informatiques et données de calibration pour la mise en œuvre des modes de réalisation de l'invention ; les programmes informatiques stockés comprennent notamment un programme informatique comprenant des instructions adaptées à la mise en œuvre de chacune des étapes du procédé selon l'invention lorsque ledit programme est exécuté sur l'unité de traitement 106, ladite mémoire FLASH 603 est alors un exemple de moyen non-transitoire de stockage d'informations, amovible ou non, partiellement ou totalement lisible par un ordinateur ou un microprocesseur comportant des instructions de code du programme informatique pour l'exécution de chacune des étapes du procédé selon l'invention ;
- une interface réseau 604, notée NET, est normalement connectée à un réseau de communication sur lequel des données numériques à traiter sont transmises ou reçues ; L'interface réseau 604 peut être une seule interface réseau, ou composée d'un ensemble d'interfaces réseau différentes (par exemple filaire et sans fil, interfaces ou différents types d'interfaces filaires ou sans fil). Des paquets de données sont envoyés sur l'interface réseau pour la transmission ou sont lues à partir de l'interface de réseau pour la réception sous le contrôle de l'application logiciel exécuté dans le processeur 601 ;
- une interface utilisateur GUI 605 pour recevoir des entrées d'un utilisateur ou pour afficher des informations à un utilisateur notamment des informations de guidage (vocales et/ou visuelles), comportant ici notamment l'écran 5 ;

- un module d'entrée/sortie 607 pour la réception / l'envoi de données depuis / vers des périphériques externes tels que disque dur, support de stockage amovible ou autres.

Le code exécutable peut être stocké dans la mémoire non volatile 603, par exemple une mémoire flash ou une mémoire morte, ou sur un support amovible numérique tel que par exemple un disque. Selon une variante, le code exécutable des programmes peut être reçu au moyen d'un réseau de communication, via l'interface réseau 604, afin d'être stocké dans l'un des moyens de stockage de l'unité de traitement de l'information 106, tel que la mémoire FLASH 603, avant d'être exécuté.

L'unité centrale de traitement 601 est adaptée pour commander et diriger l'exécution des instructions ou des portions de code logiciel du programme ou des programmes selon l'un des modes de réalisation de l'invention, instructions qui sont stockées dans l'un des moyens de stockage précités, tel que la mémoire FLASH 603. Après la mise sous tension, le CPU 601 est capable d'exécuter des instructions de la mémoire RAM transitoire 602, relatives à une application logicielle. Un tel logiciel, lorsqu'il est exécuté par le processeur 601, provoque l'exécution du procédé selon l'invention.

Dans ce mode de réalisation, l'appareil est un appareil programmable qui utilise un logiciel pour mettre en œuvre l'invention. Toutefois, à titre subsidiaire, la présente invention peut être mise en œuvre dans le matériel (par exemple, sous la forme d'un circuit intégré spécifique ou ASIC (de l'anglais *application-specific integrated circuit* ) ou sous la forme d'un composant logique programmable ou FPGA (de l'anglais *field-programmable gate array*).

L'unité de traitement de l'information 106 telle qu'illustrée est locale dans le terminal 1 utilisateur du dispositif mais peut aussi être distribuée et comporter de multiples sous unités de traitement, notamment physiquement déportées (en dehors du terminal utilisateur qu'est le téléphone mobile tel que précédemment illustré) communiquant entre elles via l'interface réseau, de même une partie de la mémoire peut être physiquement déportée, hébergée par exemple sur un serveur distant. Par exemple, le terminal utilisateur est le maître et les modules d'initialisation, d'acquisition et de pilotage sont hébergés localement dans le terminal utilisateur mais les autres modules peuvent ne pas être, ou en partie seulement, hébergés localement mais dans une entité de traitement physiquement déportée esclave, telle qu'un serveur distant, ce partage des calculs entre terminal utilisateur local et serveur distant permet de n'envoyer au serveur distant que les informations nécessaires à la prise de décision et ainsi de minimiser le temps de réponse lié à l'échange de données et le débit réseau, sans compromettre la sécurité côté client liée à de l'ingénierie inverse. Le terminal peut par exemple échanger avec le serveur distant les informations biométriques acquises tel qu'illustré dans le document FR1661737.On peut y compris avoir des calculs redondants, le serveur distant vérifiant tout ou partie de ce qu'a calculé le terminal. En variante, le serveur distant est le maître et le terminal utilisateur l'esclave, de manière à ce que le paramètre invariant soit choisi et défini par le serveur distant, puis transmis au terminal utilisateur de manière à ce que ce dernier mette en œuvre le pilotage en conséquence, ce qui permet de maximiser la sécurité du terminal 1 de l'utilisateur et de prévenir un rejeu du côté du terminal utilisateur, ce dernier étant agnostique du paramètre invariant choisi et/ou de sa valeur, l'un et/ou l'autre pouvant varier lors de la mise en œuvre du procédé selon l'invention. De même, le terminal utilisateur peut ensuite n'envoyer au serveur distant que les informations nécessaires à la prise de décision (par exemple que le signal observé voire la valeur estimée du paramètre invariant) pour minimiser le temps de réponse lié à l'échange de données et le débit réseau, et réduire les risques liés à de l'ingénierie inverse côté client .

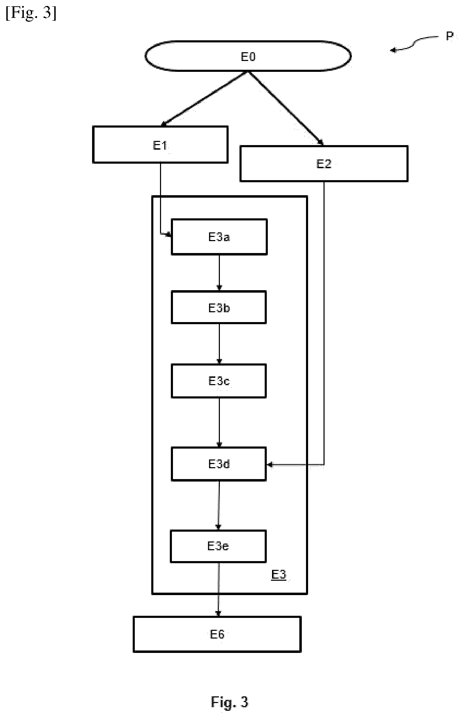

En référence à la [Fig.3], l'utilisateur du terminal 1 utilise le terminal pour s'authentifier sur un compte en ligne via une application. Un procédé biométrique d'authentification du visage présenté à la caméra est alors initié, invitant l'utilisateur à présenter son visage 2 dans le champ d'acquisition 4 de la caméra 3. Avant de générer le gabarit biométrique et d'accéder au gabarit enrôlé de l'utilisateur pour le comparer, le procédé biométrique d'authentification appelle le procédé P de sécurisation d'accès distant afin de détecter des tentatives de fraude lors de l'accès au compte en ligne.

A l'appel, par le procédé biométrique d'authentification du visage, du procédé P de sécurisation, l'unité de traitement de l'information 106 du dispositif met en œuvre l'étape d'initialisation E0 du procédé P de sécurisation correspondant notamment à la vérification du fonctionnement de la caméra 3 du terminal 1.

Le procédé P de sécurisation se poursuit alors par la mise en œuvre, par l'unité de traitement de l'information 106, des instructions de :

- acquisition E1 vidéo d'information biométrique par la caméra ;
- tirage aléatoire (non représenté) d'une première valeur entre 0.5 et 3 pour le premier paramètre invariant (ici la fréquence fondamentale du signal imposé) et tirage aléatoire d'une deuxième valeur entre 0 et $2\pi$ pour le second paramètre invariant (ici déphasage entre la composante bleue et la composante rouge du signal imposé),
- pilotage E2, pendant l'étape d'acquisition, de l'affichage sur plus de la moitié de l'écran 5 de couleur variant selon un signal temporellement variable imposé dont la composante rouge et la composante bleue sont des signaux périodiques de fréquence fondamentale égale à la première valeur tirée aléatoirement et présentant entre elles un déphasage égal à la deuxième valeur tirée aléatoirement, la composante verte étant invariante temporellement (et initialisée par exemple au niveau 255), ledit signal imposé codant ainsi deux paramètres invariants qui sont ici (non limitativement) des paramètres du spectre: fréquence fondamentale du signal imposé et déphasage entre les deux composantes temporellement variables du signal imposé ;
- évaluation E3 , à partir d'une première série d'images de l'acquisition, de la présence de fraude par injection ou recapture; par :
- détection E3a d'une région d'intérêt prédéterminée dans les images de la première série d'images ;
- détermination E3b d'un signal temporel observé représentatif des valeurs de pixels des images de la première série d'images sur tout ou partie de la région d'intérêt détectée ;
- estimation E3c dudit au moins un paramètre invariant du signal temporel observé ;
- calcul E3d d'une différence entre ledit au moins un paramètre invariant du signal temporel observé et ledit au moins un paramètre invariant du signal imposé;
- autorisation E6 de poursuite de l'accès à la source de données en fonction de la différence de paramètre invariant calculée. Dans le cas contraire, le procédé biométrique d'authentification est interrompu et un message d'erreur peut être affiché sur l'écran 5. Dans les deux cas le statut horodaté, de réussite (absence de fraude) ou d'échec (fraude détectée), est préférentiellement inscrit dans un registre local RAM ou dans un registre externe.

Le pilotage E2 de l'affichage sur une partie de l'écran 5 de couleur variant selon un signal temporellement variable de fréquence fondamentale imposée et de déphasage entre la composante bleue et la composante rouge imposé, fréquence fondamentale et déphasage ayant été fixés aléatoirement, permet de faire varier la couleur dans la partie de l'écran 5 périodiquement et sans qu'il soit répétable car il dépend de deux paramètres tirés aléatoirement et indépendamment. Ce signal temporellement variable imposé est un signal périodique composé de deux composantes couleurs périodiques et constitue un défi, le ou les composantes périodiques du signal temporellement variable imposé pouvant être de type sinusoïdal, en créneau ou triangulaire, les deux composantes n'étant pas nécessairement du même type.

Si la périodicité du signal temporellement variable imposé peut être, comme ici, la même pour toutes ses composantes, elle peut aussi n'être due qu'à une unique composante du signal Rouge Vert Bleu d'affichage, à savoir la composante bleue, verte ou rouge : le signal temporellement variable piloté étant alors composé d'une seule composante couleur périodique, les autres conservant alors un niveau fixe pendant l'étape de pilotage, ce niveau pouvant néanmoins varier entre chaque mise en œuvre du procédé, ces niveaux fixes étant avantageusement fixés aléatoirement. Il est néanmoins préférable que le signal temporellement variable imposé soit composé de plusieurs composantes couleur, notamment périodiques, pour augmenter la diversité du défi, comme ici, et le choix des composantes rouge et bleue uniquement (non verte) permet d'éviter la diaphonie des couleurs.

Par exemple les composantes rouge et bleue du signal temporellement variable imposé peuvent être en créneau et s'écrire tel que :

$$\begin{cases} rouge = a_{rouge}\left(\operatorname{signe}\left(\cos\left(2\pi f_{rouge}t\right)\right) + 1\right) \\ bleu = a_{bleu}\left(\operatorname{signe}\left(\cos\left(2\pi f_{bleu}t\right)\right) + 1\right) \end{cases}$$

, où les paramètres fixés aléatoirement sont :

- les fréquences $f_{rouge}$ et $f_{bleu}$ dans la plage [0.5Hz, 3Hz],
- le déphasage entre les deux composantes étant ici fixé à 0.

Les niveaux $a_{rouge}$ et $a_{bleu}$ dans la plage sont fixés (non aléatoirement) dans la plage [ 0, 255], préférentiellement à 127,5, ces amplitudes correspondent à des paramètres non estimables dans le signal observé (réponse de l'objet capturé à l'éclairage tel que piloté). Les niveaux d'amplitudes ne constituent donc pas des paramètres invariants fixés aléatoirement.

De même, la composante verte a un niveau $a_{vert}$ fixé (non aléatoirement) dans la plage [ 0, 255], préférentiellement 255, mais ce niveau ne constitue pas un paramètre invariant fixés aléatoirement d'autant que la composante verte n'est pas variable temporellement.

En variante, les composantes rouge et bleue du signal temporellement variable imposé peuvent être sinusoïdales et s'écrire tel que :

$$\begin{cases} rouge = a_{rouge}\left(\cos\left(2\pi f_{rouge}t\right) + 1\right) \\ bleu = a_{bleu}\left(\cos\left(2\pi f_{bleu}t\right) + 1\right) \end{cases}$$

, où les paramètres fixés aléatoirement sont :

- les fréquences $f_{rouge}$ et $f_{bleu}$ dans la plage [0.5Hz, 3Hz].

Le déphasage entre ces deux composantes n'est pas fixé dans ce mode de mise en œuvre.

Par ailleurs, les niveaux $a_{rouge}$ et $a_{bleu}$ sont fixés dans la plage [ 0, 255 ], préférentiellement 127,5, comme précédemment, la composante verte ayant alors un niveau $a_{vert}$ fixé dans la plage [ 0, 255], préférentiellement 255, comme précédemment.

Dans le mode préférentiel, illustré dans le mode de réalisation propre à cette figure, les composantes rouge et bleue du signal temporellement variable imposé sont périodiques sinusoïdales et déphasées entre elles et s'écrivent tel que :

$$
\begin{cases}
rouge = a_{rouge}\left( \cos\left( 2\pi f_{rouge}t \right) + 1 \right) \\
bleu = a_{bleu}\left( \cos\left( 2\pi k_{bleu} f_{rouge}t + \phi_{bleu} \right) + 1 \right)
\end{cases}
$$

, où les paramètres fixés aléatoirement sont :

- la fréquence $f_{rouge}$ dans la plage [0.5Hz, $3/k_{bleu}$Hz] de manière à avoir les fréquences des deux composantes dans l'intervalle préférentiel,
et
- la phase $\phi_{bleu}$ dans la plage [ 0, $2\pi$ ], ce qui correspond au déphasage entre la composante bleue et la composante rouge du signal imposé.

Par ailleurs,

- les niveaux $a_{rouge}$ et $a_{bleu}$ sont fixés dans la plage [ 0, 255 ], préférentiellement 127,5, comme précédemment, la composante verte ayant alors un niveau $a_{vert}$ fixé dans la plage [ 0, 255], préférentiellement 255, comme précédemment ;
- et un entier naturel $k_{bleu}$ dans la plage [ 1, 6 ], est préférentiellement fixé à 1. Ainsi, les fréquences des deux composantes sont choisies égales (multiple = 1), ce qui permet d'obtenir un déphasage constant aisément mesurable et vérifiable sur le signal observé. En variante, dans le cas où la fréquence fondamentale de la deuxième composante (ici bleue) est multiple de la fréquence fondamentale de la première composante (ici rouge), il faudra par exemple estimer la phase de la deuxième composante du signal observé lorsque la phase de la première composante du signal observé sera nulle pour connaître le déphasage entre lesdites deux composantes du signal observé.

Les fréquences fondamentales supérieures à 3 Hz sont préférentiellement évitées, à la fois pour des raisons de bien-être de l'utilisateur et pour des raisons d'échantillonnage de manière à pouvoir traiter une séquence vidéo dès lors que sa fréquence d'échantillonnage est d'au moins 6 Hz (critère de Shannon). Néanmoins, il convient de noter que les téléphones portables comportent des caméras classiquement aptes à effectuer des vidéos à au moins 25 Hz localement (sans diffusion externe (streaming, en anglais)) pour des résolutions hautes densités donc la valeur maximale de cette plage peut être augmentée, notamment si l'information biométrique acquise n'est pas un visage mais un dermatoglyphe par exemple car le confort utilisateur ne serait alors pas impacté.

L'évaluation E3, à partir d'une première série d'images de l'acquisition, d'une fraude par injection ou recapture repose sur la vérification des paramètres du défi par analyse spectrale du signal acquis : c'est-à-dire reçu, signal qui correspond donc à la réponse de l'objet (censé être le visage de l'utilisateur) à l'éclairage piloté. La première série d'images ne comporte pas nécessairement toutes les images acquises à l'étape E1, l'analyse spectrale étant robuste à la perte par exemple d'une image et pouvant être réalisée par exemple sur la base d'une première série comportant une image sur deux. Une sélection des images acquises pour former ladite première série d'images peut reposer par exemple sur des critères de qualité ISO des images acquises, ou encore on pourrait ne conserver que les images acquises qui comportent l'intégralité du visage (par opposition à un visage dont une partie serait hors champ). De même ladite première série peut ne comporter que des images d'une fenêtre temporelle de la période d'acquisition E1 par la caméra 3, préférentiellement ladite fenêtre temporelle a une durée supérieure ou égale à deux fois la période maximale du ou des signaux imposés (composantes) avec une fréquence d'échantillonnage supérieure ou égale à deux fois la fréquence maximale du ou des signaux imposés (composantes).

Ladite évaluation E3 de la présence de fraude par injection ou recapture comporte des étapes de :

- détection E3a du visage (supposément de l'utilisateur) dans les images de la première série d'images;
- détermination E3b d'un signal temporel observé représentatif des valeurs de pixels des images de la première série d'images sur tout ou partie du visage détecté ;
- estimation E3c de la fréquence fondamentale $f_{rouge\_obs}$ et $f_{bleu\_obs}$ de chaque composante périodique du signal temporel observé , ici les composantes bleue et rouge sont concernées, et du déphasage $\phi_{bleu\_obs}$ entre ces deux composantes périodiques du signal temporel observé ;

- calcul E3d des différences $\Delta f_{rouge}=f_{rouge} -f_{rouge\_obs}$ , $\Delta f_{bleu}=f_{bleu} - f_{bleu\_obs}$ (sachant que ici $f_{bleu}=\boldsymbol{k_{bleu}f_{rouge}}$) entre la fréquence fondamentale estimée de chaque composante périodique du signal temporel observé et la fréquence fondamentale imposée de chaque composante périodique du signal imposé et d'une différence $\Delta\phi_{bleu} = \phi_{bleu} - \phi_{bleu\_obs}$ entre le déphasage imposé et le déphasage estimé;
- détermination E3e d'une probabilité d'injection ou de recapture en fonction des différences de fréquence $\Delta f_{rouge}$ , $\Delta f_{bleu}$ et de déphasage $\Delta\phi_{bleu}$ calculés.

L'étape de détection E3a du visage comprend la détermination d'une région d'intérêt dans une image correspondant à la localisation du visage dans ladite image. La région d'intérêt est typiquement une zone rectangulaire (ou boîte) englobant le visage afin d'isoler le visage de son environnement apparaissant dans l'arrière-plan de l'image. D'autres types de régions d'intérêt peuvent être utilisée. La région d'intérêt peut par exemple être définie par un contour entre la peau et l'arrière-plan, délimitant le visage par rapport à son arrière-plan.

La région d'intérêt peut être déterminée au moyen de plusieurs approches. Une approche est par exemple d'analyser l'image pour en détecter des particularités physiques telles que les yeux. Dans la mesure où les visages sont constitués d'éléments similaires (yeux, nez, bouches, etc.) spatialement organisés de manière similaire, la détection de ces éléments est facilitée. Une autre approche est par exemple d'utiliser un modèle de calcul tel qu'un réseau de neurone, une machine à vecteur de support ou un arbre de décision, préalablement entraîné par sur une base d'apprentissage d'images présentant des visages variés.

Cette étape de détection du visage peut être mise en œuvre par l'unité de traitement de l'information 106 sur les images de la première série transmise par la caméra 3. Il est également possible que cette étape de détection du visage soit mise en œuvre par un autre élément que l'unité de traitement de l'information 106, comme par exemple la caméra 3, et que l'unité de traitement de l'information 106 ne reçoive que les régions d'intérêt plutôt que les images complètes.

Préférentiellement, la détermination E3b d'un signal temporel observé représentatif des valeurs de pixels des images de la première série d'images n'est basée que sur une partie du visage détecté, notamment sur les zones de peau, en utilisant pas exemple la méthode de segmentation décrite dans le document Wang, B., Chang, X., & Liu, C. (2011). Skin detection and segmentation of human face in color images, International Journal of Intelligent Engineering and Systems, 4(1), 10-17. Ce choix permet d'éviter les biais liés aux lunettes par exemple. Pour chaque image de la première série, un calcul de la moyenne des niveaux sur ladite partie du visage permet de constituer un signal temporel observé pour ladite zone du visage par composante. Par ailleurs, il peut y avoir autant de signaux temporels que de sous-régions du visage.

L'estimation E3c permet de déterminer les valeurs des paramètres invariants dans le signal temporel observé. Des méthodes sont connues pour estimer la fréquence fondamentale et la phase associée, telle que dans le document De Cheveigné, A., & Kawahara, H. (2002). YIN, a fundamental frequency estimator for speech and music. The Journal of the Acoustical Society of America, 111(4), 1917-1930. Dans le cas préférentiel dans lequel plusieurs sous-régions du visage sont traitées, il y a autant de signaux temporels à traiter que de sous-régions du visage, et dans le cas illustré ici la fréquence fondamentale de chaque composante bleue et rouge ainsi que le déphasage associé sont à estimer pour chacun d'eux, puis un mécanisme de vote est par exemple mis en œuvre pour n'obtenir qu'une valeur commune aux sous-régions de chacun des paramètres invariants du signal temporel observé. En variante et non limitativement, une moyenne pourrait remplacer le mécanisme de vote.

Est ensuite mise en œuvre l'étape de calcul E3d des différences entre les valeurs des paramètres invariants fixées aléatoirement du signal imposé et les valeurs estimées à l'étape précédente E3c pour le signal observé, ce qui permet de vérifier si le signal observé respecte le même spectre que le signal imposé, c'est à dire ici les deux valeurs des paramètres invariants fixées aléatoirement correspondent :c'est à dire ici: $f_{rouge} =f_{rouge\_obs}=f_{bleu\_obs}$ et $\phi_{bleu} = \phi_{bleu\_obs}$;

- détermination E3e de la probabilité d'injection ou de recapture en fonction des différences calculées, par exemple par normalisation des différences calculées en utilisant une loi normale par exemple, voire concaténation fonction desdites différences calculées par exemple par produit des probabilités issues par normalisation de chaque différence ;

Puis, si la probabilité d'injection ou de recapture est inférieure à un premier seuil prédéterminé, alors la poursuite du procédé biométrique d'authentification en vue de l'accès au compte est autorisée E6, et un statut accepté de la requête inscrit dans un registre lié au procédé de sécurisation alors que sinon le procédé biométrique d'authentification est interrompu et un statut refusé de la requête inscrit dans le registre lié au procédé de sécurisation.

Ce procédé de sécurisation permet ainsi de se protéger contre des fraudeurs qui chercheraient à rejouer un enregistrement vidéo précédemment acquis de l'utilisateur dans les mêmes conditions en montrant ladite vidéo face à la caméra du terminal 1 car la vidéo acquise ne serait pas conforme au défi, de même s'il s'agit d'une injection d'une telle vidéo à distance. En outre, le procédé selon l'invention ne nécessite pas de vérifier de synchronisation entre un signal émis et un signal reçu grâce à la nature du signal périodique imposé et l'utilisation associée de l'analyse fréquentielle, ce qui facilite les traitements.

De manière non limitative, le ou les signaux temporels à paramètres invariants ont été illustrés avec des signaux périodiques néanmoins le signal temporellement variable imposé caractérisé par au moins un paramètre invariant temporellement peut également être non périodique. Par exemple, le signal temporellement variable imposé comporte au moins deux composantes couleur et le paramètre invariant du signal est un ratio de fréquence instantanée entre lesdites au moins deux composantes qui sont par exemple modulées en fréquence mais dont la modulation suit un ratio fixé, s'écrivant tel que :

$$\begin{cases} \textbf{rouge} = \cos\left(2\pi \mathrm{s}(t)\right) \\ \textbf{bleu} = \cos\left(2\pi\,\alpha\,\mathrm{s}(t)\right) \end{cases}$$

avec :

- s une fonction strictement croissante, les fréquences instantanées étant respectivement s' (dérivée de s) et $\alpha$ .s' .
- $\alpha$ le paramètre invariant temporellement dont la valeur est fixée aléatoirement dans la plage [1 ; 3].

En variante, non illustrée ici, le procédé selon l'invention pourrait s'appliquer à la capture de dermatoglyphe, en utilisant préférentiellement pour l'acquisition E1 la caméra principale du terminal 1 (arrière d'un smartphone, tablette par exemple) : de meilleure résolution et en faisant par exemple clignoter le flash selon le signal temporellement variable de fréquence fondamentale imposée et de phase imposée.

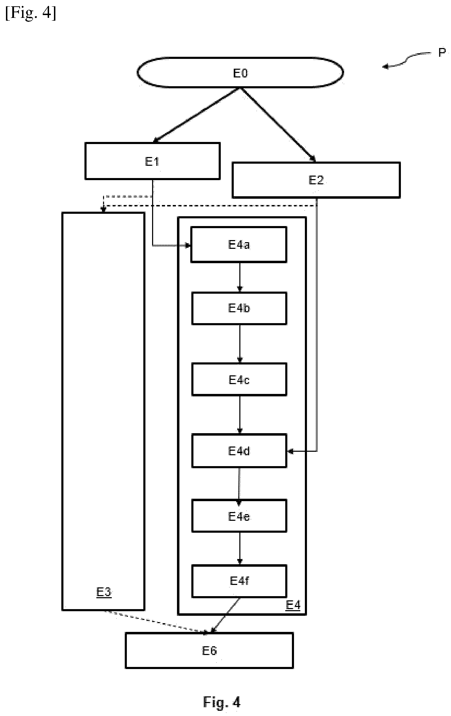

En référence à la [Fig.4], le procédé de sécurisation comporte une vérification complémentaire améliorant encore la robustesse aux fraudes par présentation : sur écran ou par présentation de photo imprimée par exemple, en ajoutant une étape d'évaluation E4, à partir d'une deuxième série d'images de l'acquisition, de la présence de fraude par présentation par :

- pour chaque image de la deuxième série, alignement E4a spatial desdites images par rapport à un point de référence du visage détecté, par exemple par recalage des yeux
- détermination E4b d'au moins une zone d'intérêt dans le visage détecté, ladite zone d'intérêt étant commune aux images de la deuxième série,
- détermination E4c d'un signal temporel observé par zone d'intérêt,
- estimation E4d, par zone d'intérêt, d'une contribution du signal imposé au signal observé de manière à former un vecteur de retour,
- détermination E4e d'un score par application d'un classifieur audit vecteur, ledit classifieur étant notamment mis en œuvre par un réseau de neurones,
- détermination E4f d'une probabilité de fraude par présentation en fonction du score déterminé.

Préférentiellement, dans le mode de réalisation illustré ici, la deuxième série d'images est la même que la première, ce qui permet de n'effectuer qu'une seule sélection des images pour ladite série.

De manière équivalente l'étape E4a d'alignement, qui est optionnelle, peut consister en la détermination dans chaque image de la deuxième série de zone d'intérêt correspondant à la même portion du visage et commune préférentiellement à toutes les images de la série.

A l'étape de détermination E4b, la zone d'intérêt est un triangle d'un maillage du visage détecté ou un pixel au voisinage d'un point d'intérêt du visage détecté, ladite zone d'intérêt étant présente dans toutes les images de seconde série. Un tel point d'intérêt est par exemple un point sémantique du visage, tel que l'extrémité du nez, le coin de l'œil (position parfois estimée), tel qu'enseigné par Guo, X., Li, S., Yu, J., Zhang, J., Ma, J., Ma, L., & Ling, H. (2019). PFLD: A practical facial landmark detector. arXiv preprint arXiv:1902.10859. Préférentiellement, la zone d'intérêt est une zone du visage de forme particulièrement remarquable et où il y a le moins de déformation et/ou offuscation possible de manière à réduire le bruit de mesure lors de l'acquisition notamment. Ainsi la zone du nez est particulièrement intéressante, mais pas exclusivement. Plusieurs zones d'intérêt peuvent être déterminées.

L'étape de détermination E4c d'un signal temporel observé par zone d'intérêt a déjà été décrite en référence à la [Fig.3].

L'étape d'estimation E4d, par zone d'intérêt, d'une contribution du signal piloté au signal observé de manière à former un vecteur de retour est par exemple mis en œuvre par filtrage du signal observé à la fréquence fondamentale imposée et calcul de l'amplitude. En présence de plusieurs zones d'intérêt, les amplitudes obtenues par zone d'intérêt sont alors assemblées ensemble sous forme d'un vecteur de retour, dit aussi d'apparence. Le vecteur de retour est alors par exemple formé d'autant de sous-vecteurs que de signaux temporellement variables imposés, ce qui permet de disposer en entrée du classifieur d'un vecteur de vecteurs (appelé aussi matrice, avec par exemple autant de colonnes que de signaux imposés (composantes couleurs périodiques notamment) et autant de lignes que de zones). Ce vecteur de retour montre par exemple des réponses plus fortes au niveau des lunettes ou des yeux, et des variations suivant les parties du visage.

Puis l'étape de détermination E4e d'un score comporte l'application d'un classifieur audit vecteur, ledit classifieur étant notamment mis en œuvre par un réseau de neurones.

Préférentiellement, le classifieur est dit « profond » et constitué par apprentissage supervisé, préalablement entraîné à partir d'exemples de vrais visages et de fraudes sur écran ou papier.

Puis, l'étape de détermination E4f de la probabilité de fraude par présentation en fonction du score déterminé est mise en œuvre, en appliquant par exemple une fonction sigmoïde ou en utilisant une table.

Enfin, si la probabilité de fraude par présentation est inférieure à un deuxième seuil prédéterminé, cette condition étant préférentiellement concaténée à celle décrite à l'étape E6 en référence à la figure précédente, c'est-à-dire que les deux conditions doivent être respectées pour poursuivre , alors la poursuite du procédé biométrique d'authentification en vue de l'accès au compte est autorisée E6, et un statut accepté de la requête inscrit dans un registre lié au procédé de sécurisation alors que sinon le procédé biométrique d'authentification est interrompu et un statut refusé de la requête inscrit dans le registre lié au procédé de sécurisation.

Cette vérification complémentaire permet de discriminer une fraude sur écran, c'est-à-dire si un fraudeur positionne un écran sur lequel un enregistrement vidéo de l'utilisateur légitime est affiché ainsi, ou une fraude sur papier car alors le vecteur de retour ne correspondra pas à un vecteur de retour correct, par exemple parce que les réponses seront sensiblement identiques quelles que soient les zones, l'écran ou le papier présenté, par le fraudeur, face à la caméra 3 étant « plat ».

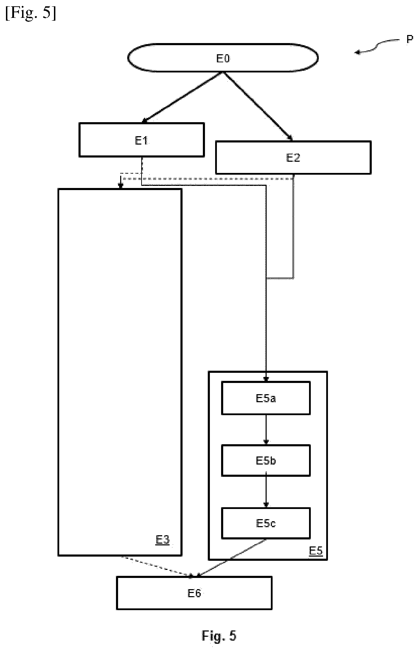

En référence à la [Fig.5], dans le cas de signal imposé périodique, le procédé de sécurisation comporte une vérification additionnelle améliorant encore la robustesse aux spécifiques par recapture ou injection par exemple, en ajoutant une étape d'évaluation E5, à partir de la troisième série d'images de l'acquisition, d'une présence de fraude spécifique par recapture ou injection par :

- détermination E5a d'une latence observée en fonction de la fréquence fondamentale imposée, ici $f_{rouge}$ , et d'un déphasage Φ estimé entre le signal temporel périodique imposé et ledit signal temporel observé représentatif des valeurs de pixels des images de la troisième série d'images sur tout ou partie du visage détecté commun auxdites images de la troisième série d'images. Sur la base de ces deux éléments, on en déduit alors un temps de réponse $t_{réponse}$ à une période près : $$t_{réponse} = \frac{\Phi}{2\pi f_{rouge}} + \frac{n}{f_{rouge}}$$ avec n : entier naturel, mais égal à 0 par construction puisque, de par la plage de fréquence fondamentale imposée du signal imposé, en pratique la latence attendue est de l'ordre de 100ms, donc nettement plus faible que $1/f_{rouge}$, ce qui permet de calculer précisément la latence ;

- calcul E5b d'une différence entre la latence observée $lat_{obs}$ et une latence de référence $lat_{ref}$ obtenue préalablement pour ledit terminal ou pour un même modèle de terminal , pour obtenir cette latence de référence, on peut par exemple disposer d'une banque de latence par modèle de terminal, ou consulter la latence obtenue par les autres utilisateurs du même appareil, ou encore avoir mesuré ladite latence de référence lors de l'enrôlement du terminal 1, ce qui est le cas le plus simple mais nécessite que l'utilisateur n'ait pas changé de terminal 1 entre temps ;

- détermination E5c de la probabilité spécifique de fraude par recapture ou injection en fonction de la différence de latence calculée, par exemple au moyen de la fonction $$1 - \frac{e^{\left(-\frac{(lat_{obs}-lat_{ref})^2}{2\sigma^2}\right)}}{\sqrt{2\pi\sigma^2}}$$ avec σ un écart-type (par exemple ici de sensiblement 10ms), ce qui permet d'évaluer une vraisemblance de la latence observée si on suppose que la latence observée a une distribution gaussienne (loi normale) centrée sur la latence de référence avec un écart type de σ.

Enfin, si la probabilité spécifique de fraude par recapture ou injection est inférieure à un troisième seuil prédéterminé, cette condition étant donc concaténée à celle décrite à l'étape E6 en référence aux figures précédentes, alors la poursuite du procédé biométrique d'authentification en vue de l'accès au compte est autorisée E6, et un statut accepté de la requête inscrit dans un registre lié au procédé de sécurisation alors que sinon le procédé biométrique d'authentification est interrompu et un statut refusé de la requête inscrit dans le registre lié au procédé de sécurisation.

En variante, comme pour les étapes E3 et E4 l'étape intermédiaire de calcul de probabilité n'est pas limitatif, l'autorisation d'accès de l'étape E6 pouvant dépendre de l'infériorité de la différence de latences calculée à un seuil de sensiblement 10ms par exemple.

La série d'image utilisée ici est la première série d'images, pour les mêmes raisons que précédemment.

Cette étape additionnelle permet de vérifier la cohérence entre la latence observée et la latence de référence et ainsi de mieux identifier des fraudes expertes par recapture ou injection.

Préférentiellement, un paramètre d'acquisition, tel que la taille d'image de la caméra, est modifié pendant l'acquisition E1 et la probabilité spécifique de fraude par recapture ou injection est alors augmentée en absence de modification de la latence observée pendant l'acquisition, car cela signifier que le défi n'est pas vérifié puisque la modification de taille d'image fait nécessairement varier le délai de capture.

De manière non limitative, les premier, deuxième et troisième seuil sont par exemple fixés à 0,5.

De manière non limitative, sur les figures 3 à 5 l'étape d'acquisition E1 vidéo par la caméra 3 a été positionnée en amont de l'étape de pilotage E2, mais les deux peuvent être concomitantes, voire l'étape de pilotage pourrait lancer l'acquisition vidéo par la caméra 3.

De même, dans les modes de réalisation illustrés en référence aux figures 3 à 5 l'étape E3 d'évaluation, à partir d'une première série d'images de l'acquisition, d'une probabilité d'injection ou de recapture , a toujours été incluse néanmoins, les étapes E3, E4 et E5 sont indépendantes et ne nécessitent pas la présence d'une autre de ces étapes.

**Revendications**

1. Procédé (P) de sécurisation d'accès distant à une source de données à partir d' un terminal (1) par un utilisateur dudit terminal, le terminal comportant une source lumineuse (5) et une caméra (3) orientées vers ledit utilisateur, ledit procédé comportant des étapes de :

   - acquisition (E1) vidéo par la caméra (3) ;
   - pilotage (E2), pendant l'étape d'acquisition, de la source lumineuse (5) selon un signal temporellement variable imposé dont au moins un paramètre est invariant temporellement et de valeur fixée aléatoirement;
   - évaluation (E3) , à partir d'une première série d'images de l'acquisition, d'une présence de fraude par injection ou recapture par :

      - estimation (E3c) dudit au moins un paramètre invariant d'un signal temporel de la première série d'images ;
      - autorisation (E6) de poursuite de l'accès à la source de données en fonction de la valeur fixée et de la valeur estimée dudit au moins un paramètre invariant .

2. Procédé selon la revendication 1, dans lequel l'étape d'évaluation (E3) comporte :

   - détection (E3a) d'une région d'intérêt prédéterminée dans les images de la première série d'images ;
   - détermination (E3b) d'un signal temporel observé représentatif des valeurs de pixels des images de la première série d'images sur tout ou partie de la région d'intérêt détectée ;
   - lors de l'estimation (E3c) ledit signal temporel de la première série d'images est ledit signal temporel observé
   - calcul (E3d) d'un rapport entre ledit au moins un paramètre invariant du signal temporel observé et ledit au moins un paramètre invariant du signal imposé ;

   l'autorisation (E6) de poursuite de l'accès à la source de données étant fonction du rapport de paramètre invariant calculé.

3. Procédé selon la revendication précédente, dans lequel le rapport est une différence ou un ratio.

4. Procédé selon l'une quelconque des revendications précédentes, dans lequel la région d'intérêt prédéterminée comprend tout ou partie d' un visage.

5. Procédé selon l'une quelconque des revendications précédentes, dans lequel le signal temporellement variable imposé est une composante couleur périodique dont le paramètre invariant temporellement est une fréquence fondamentale.

6. Procédé selon l'une quelconque des revendications 1 à 4, dans lequel le signal temporellement variable imposé comporte au moins deux composantes couleur et le paramètre invariant du signal est un ratio de fréquence instantanée entre lesdites au moins deux composantes.

**7.** Procédé selon l'une quelconque des revendications 1 à 4, dans lequel le signal temporellement variable imposé comporte au moins deux composantes couleur périodiques de même fréquence fondamentale ou multiples d'une même fréquence fondamentale, avec un déphasage entre lesdites au moins deux composantes, ledit au moins un paramètre invariant temporellement du signal imposé étant ladite fréquence fondamentale ou le déphasage.

**8.** Procédé selon l'une quelconque des revendications 1 à 5, 7, dans lequel la fréquence fondamentale imposée est fixée aléatoirement dans une plage [0.5Hz, 3Hz].

**9.** Procédé selon l'une quelconque des revendications précédentes, dans lequel le terminal (1) comporte un écran d'affichage, la source lumineuse étant tout ou partie de l'écran (5) d'affichage du terminal (1) et le pilotage de la source lumineuse correspondant à un affichage sur tout ou partie de l'écran (5) de couleur variant selon le signal temporellement variable imposé.

**10.** Procédé selon l'une quelconque des revendications 1 à 3, 7 à 9, dans lequel le signal temporellement variable imposé est de type sinusoïdal.

**11.** Procédé selon l'une quelconque des revendications 1 à 10, comportant une étape d'évaluation (E4) , à partir d'une deuxième série d'images de l'acquisition, d'une présence de fraude par présentation par :

- détermination (E4b) d'au moins une zone d'intérêt dans la région d'intérêt détectée, ladite zone d'intérêt étant commune aux images de la deuxième série,
- détermination (E4c) d'un signal temporel observé par zone d'intérêt,
- estimation (E4d), par zone d'intérêt, d'une contribution du signal imposé au signal observé de manière à former un vecteur de retour,
- détermination (E4e) d'un score par application d'un classifieur audit vecteur, ledit classifieur étant notamment mis en œuvre par un réseau de neurones

et l'étape d'autorisation (E6) de poursuite de l'accès à la source de données étant fonction du score déterminé.

**12.** Procédé selon l'une quelconque des revendications 5, 7 à 11, comportant une étape d'évaluation (E5), à partir d'une troisième série d'images de l'acquisition, d'une présence de fraude spécifique par recapture ou injection par :

- détermination (E5a) d'une latence observée en fonction de la fréquence fondamentale du signal temporellement variable périodique imposé et d'un déphasage estimé entre le signal temporel périodique imposé et un signal temporel observé représentatif des valeurs de pixels des images de la troisième série d'images sur tout ou partie de la région d'intérêt détectée commune auxdites images de la troisième série d'images,
- calcul (E5b) d'une différence entre la latence observée et une latence de référence obtenue préalablement pour ledit terminal ou pour un même modèle de terminal,

et l'autorisation (E6) de poursuite de l'accès à la source de données étant fonction de la différence de latence calculée.

**13.** Procédé selon la revendication 11 à 12, dans lequel la deuxième ou la troisième série d'images de l'acquisition et la première série d'images de l'acquisition sont identiques.

**14.** Programme d'ordinateur comprenant des instructions adaptées à la mise en œuvre de chacune des étapes du procédé de sécurisation d'accès distant à une source de données selon l'une quelconque des revendications 1 à 13 lorsque ledit programme est exécuté sur un ordinateur.

**15.** Moyen de stockage non transitoire d'informations, amovible ou non, partiellement ou totalement lisible par un ordinateur ou un microprocesseur comportant des instructions de code d'un programme d'ordinateur pour l'exécution de chacune des étapes du procédé selon l'une quelconque des revendications 1 à 13.

[Fig. 1]

Fig. 1

[Fig. 2]

Fig. 2

[Fig. 3]

Fig. 3

[Fig. 4]

Fig. 4

[Fig. 5]

Fig. 5

Europäisches
Patentamt

European
Patent Office

Office européen
des brevets

## RAPPORT DE RECHERCHE EUROPEENNE

Numéro de la demande

EP 25 17 2147

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2016/071275 A1 (HIRVONEN DAVID [US]) 10 mars 2016 (2016-03-10) * alinéa [0001] * * alinéa [0003] - alinéa [0008] * * alinéa [0035] - alinéa [0047] * ----- | 1-15 | INV. G06F21/32 G06V40/16 G06V40/40 G06V10/141 G06V10/143 |
| X | US 2015/195288 A1 (HOYOS HECTOR [US] ET AL) 9 juillet 2015 (2015-07-09) * alinéas [0012], [0058], [0169] - alinéa [0180] * * alinéa [0183] - alinéa [0197] * ----- | 1-15 | |
| A | US 2018/122066 A1 (PRASAD PRATHOSH A [IN] ET AL) 3 mai 2018 (2018-05-03) * alinéas [0003], [0013] - alinéa [0030] * ----- | 1-15 | |

DOMAINES TECHNIQUES RECHERCHES (IPC)

G06F
G06V

Le présent rapport a été établi pour toutes les revendications

| Lieu de la recherche | Date d'achèvement de la recherche | Examinateur |
|---|---|---|
| Munich | 3 juin 2025 | Barla Harter, I |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.................................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 25 17 2147

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

03-06-2025

| Document brevet cité au rapport de recherche | Date de publication | Membre(s) de la famille de brevet(s) | Date de publication |
|---|---|---|---|
| US 2016071275 A1 | 10-03-2016 | AU 2015315156 A1 | 23-03-2017 |
| | | AU 2018247216 A1 | 01-11-2018 |
| | | BR 112017004427 A2 | 05-12-2017 |
| | | CA 2960397 A1 | 17-03-2016 |
| | | CN 107077602 A | 18-08-2017 |
| | | EP 3192008 A2 | 19-07-2017 |
| | | ES 2688399 T3 | 02-11-2018 |
| | | JP 6257840 B2 | 10-01-2018 |
| | | JP 2017534102 A | 16-11-2017 |
| | | KR 20170052636 A | 12-05-2017 |
| | | MX 359546 B | 02-10-2018 |
| | | RU 2017111779 A | 10-10-2018 |
| | | SG 11201701855R A | 27-04-2017 |
| | | US 2016071275 A1 | 10-03-2016 |
| | | US 2017053406 A1 | 23-02-2017 |
| | | WO 2016040487 A2 | 17-03-2016 |
| US 2015195288 A1 | 09-07-2015 | US 2014337930 A1 | 13-11-2014 |
| | | US 2015195288 A1 | 09-07-2015 |
| | | US 2016205096 A1 | 14-07-2016 |
| | | US 2018260553 A1 | 13-09-2018 |
| US 2018122066 A1 | 03-05-2018 | AUCUN | |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3100074

- FR 1661737

**Littérature non-brevet citée dans la description**

- **WANG, B.** ; **CHANG, X.** ; **LIU, C.** Skin detection and segmentation of human face in color images. *International Journal of Intelligent Engineering and Systems*, 2011, vol. 4 (1), 10-17

- **DE CHEVEIGNÉ, A.** ; **KAWAHARA, H.** YIN, a fundamental frequency estimator for speech and music. *The Journal of the Acoustical Society of America*, 2002, vol. 111 (4), 1917-1930
- **GUO, X.** ; **LI, S** ; **YU, J.** ; **ZHANG, J.** ; **MA, J.** ; **MA, L.** ; **LING, H.** PFLD: A practical facial landmark detector. *arXiv preprint arXiv:1902.10859*, 2019